# EUROPÄISCHE PATENTANMELDUNG

(11) **EP 1 521 445 A1**
(43) Veröffentlichungstag der Anmeldung: **06.04.2005**
(21) Anmeldenummer: 03022039.6
(22) Anmeldetag: 01.10.2003
(51) Int. Cl.: H04M 11/04, H04M 3/42, H04Q 7/38

(54) **Behandlung von Notrufen in einem Telekommunikationsnetz**

(71) Anmelder: SIEMENS AKTIENGESELLSCHAFT, 80333 München (DE)
(72) Erfinder: Schmäling, Rainer, 81547 München (DE)
(74) Vertreter: Berg, Peter, Dipl.-Ing.

(57) **Zusammenfassung**

Es wird ein Verfahren zur Behandlung von Notrufen in einem Telekommunikationsnetz (NET) angegeben, bei dem ein Notruf eines Netzteilnehmers (TE1, TE2) bei einer Notrufstelle (NS) eingeht, dort behandelt und gegebenenfalls an eine zuständige Notrufstation weitervermittelt wird. Erfindungsgemäß werden dabei alle Notrufe der Netzteilnehmer (TE1, TE2) von einer einzigen Notrufstelle (NS) im Telekommunikationsnetz (NET) angenommen. Weiterhin wird ein Telekommunikationsnetz (NET) angegeben, welches zur Durchführung des erfindungsgemäßen Verfahrens geeignet ist.

## Beschreibung

Die Erfindung betrifft ein Verfahren zur Behandlung von Notrufen in einem Telekommunikationsnetz, bei dem ein Notruf eines Netzteilnehmers bei einer Notrufstelle eingeht, dort behandelt und gegebenenfalls an eine zuständige Notrufstation weitervermittelt wird. Weiterhin betrifft die Erfindung ein Telekommunikationsnetz zur Durchführung des erfindungsgemäßen Verfahrens.

Ein Ziel bei der Entwicklung von Telekommunikationsnetzen ist es, in Not geratenen Personen bestmögliche Unterstützung zukommen zu lassen. Hierfür wurden beispielsweise für Polizei, Feuerwehr und Rettung zentrale Notrufstellen eingerichtet, denen eine leicht zu merkende Rufnummer zugeordnet wurde. Die Zuordnung der Rufnummer an eine Notrufstelle erfolgt dabei unabhängig von den Rufnummern der Notrufstationen, also den Einrichtungen, in denen tatsächlich Einsatzkräfte samt Fuhrpark basiert sind. Der geschilderte Sachverhalt trifft dabei auch für einige private, quasi-öffentliche Vereine zu, etwa Autofahrerclubs.

Für einen Netzteilnehmer, welcher in Not geraten ist, ist es - da jede Vereinigung ihre eigene Notrufstelle betreibt - dennoch schwer, sich alle wichtigen Rufnummern der Notrufstellen zu merken, vor allem in der Stresssituation bei beispielsweise einem Unfall.

Zur Lösung dieses Problems ist aus den USA das sogenannte "911-Service" bekannt, bei dem ein Anruf von einem sogenannten "Public Safety Answering Point", kurz PSAP, an eine lokale Polizei-, Rettungs- oder Feuerwehrdienststelle weitergeleitet wird. Nach dem Stand der Technik sind zur Bearbeitung der Notrufe mehrere PSAPs oder Notrufstellen erforderlich.

Durch die Verteilung der Notrufstellen über das gesamte Telekommunikationsnetz ergeben sich jedoch verschiedene Probleme. So kann eine Notrufstelle nur eine bestimmten Umfang von hochspezialisiertem Personal beschäftigen, was dazu führt, dass ein Notruf eines Netzteilnehmers von einer Notrufstelle gegebenenfalls nicht optimal bearbeitet werden kann. Auch kann technische Ausrüstung nicht in jeder Notrufstelle in beliebigem Umfang bereitgestellt werden, weswegen ein Notruf ebenfalls nur unzureichend behandelt werden kann. Dies ist ein im Hinblick auf die Notsituation der anrufenden Teilnehmer besonders unbefriedigender Zustand.

Der Erfindung liegt also die Aufgabe zugrunde, ein Verfahren anzugeben, welches die zentrale Behandlung eines Notrufes ermöglicht.

Dies geschieht mit einem Verfahren der eingangs genannten Art, bei dem alle Notrufe der Netzteilnehmer von einer einzigen Notrufstelle im Telekommunikationsnetz angenommen werden. Aus den genannten Gründen ist es möglich, durch die Zentralisierung eine Qualitätssteigerung bei der Behandlung von Notrufen herbeizuführen, um so in Not geratenen Personen optimale Hilfestellung leisten zu können. Im Falle einer in eine Vermittlungsstelle des Telekommunikationsnetzes integrierten Notrufstelle ergeben sich aber auch weitere Vorteile wie etwa hohe Verfügbarkeit, landesweites Routing mit für ein Telekommunikationsnetz bekannten Methoden, und Auswertung sämtlicher Signalisierungsinformationen eines Netzes. So ist zum Beispiel die Auswertung der Rufnummer bei einer durch eine Nebenstellenanlage gelösten Notrufstelle nicht möglich, wenn der Anrufer den Dienst "Rufnummernunterdrückung" aktiviert hat.

Günstig ist es dabei, wenn eine Standortinformation eines anrufenden Netzteilnehmers ausgewertet wird. Oft ist es von Bedeutung, wo eine Person in Not geraten ist. Durch die automatische Standortbestimmung der beispielsweise Unfallstelle können Einsatzkräfte rasch an den Ort des Geschehens geleitet werden.

Vorteilhaft ist es dabei, wenn bei einem Teilnehmer in einem Mobilfunknetz
- als Standortinformation die Mobilfunkzelle, in der sich der Teilnehmer befindet, bestimmt wird oder
- die Bestimmung der Standortinformation durch Peilung des Teilnehmers durchgeführt wird.
Bei der ersten Variante wird eine im Mobilfunknetz ohnehin vorhandene Information vorteilhaft dazu verwendet, den Standort des Teilnehmers zu bestimmen. Wenn eine genauere Ortsangabe gewünscht ist, kann der Teilnehmer auch angepeilt werden, beispielsweise durch Messung der Empfangsfeldstärken mehrerer Basisstationen. Durch teilweise bereits vorhandener technischer Ausrüstung in den Netzen kann diese Erfindungsvariante mit vergleichsweise geringem Aufwand in die Praxis umgesetzt werden.

Vorteilhaft ist es auch, wenn die Standortinformation bei einem Teilnehmer in einem drahtgebundenen Netz
- anhand der Rufnummer des Teilnehmers bestimmt wird oder
- durch Suche eines zur Rufnummer des Teilnehmers passenden Eintrags in einer Adressdatenbank bestimmt wird.

Eine grobe Bestimmung des Standortes erfolgt bei der ersten Variante durch Auswertung der Vorwahlziffern der übermittelten Rufnummer des Teilnehmers. Wird eine genauere Angabe gewünscht, kann der Standort auch über eine Adressdatenbank bestimmt werden, wobei für die übermittelte Rufnummer des Teilnehmers ein entsprechender Eintrag gesucht wird.

Eine besonders vorteilhafte Variante der Erfindung ist mit einem Verfahren gegeben, bei dem die Standortinformation in eine elektronische Landkarte eingetragen und diese Landkarte an die Notrufstation übermittelt wird. Die Einsatzkräfte können so optimal mit der für den Einsatz nötigen Information versorgt werden. Die Übermittlung kann dabei beispielsweise per Fax, E-mail oder MMS erfolgen.

Besonders vorteilhaft ist es weiterhin, wenn in die elektronische Landkarte auch eine Weginformation von einem der Notrufstation zugeordneten Ort zum Standort des Teilnehmers eingetragen wird. Hier wird eine optimale Route vom Stützpunkt der Einsatzkräfte zum Unfallort ermittelt und in die elektronische Landkarte eingetragen. Dabei können aktuelle Verkehrsinformationen, zum Beispiel über Baustellen oder Verkehrsstaus, automatisch berücksichtigt werden.

Vorteilhaft ist auch ein Verfahren,
- bei dem die Sprache eines Teilnehmers anhand seiner Rufnummer bestimmt und der Notruf in Folge einem geeigneten Bearbeiter in der Notrufstelle zugewiesen wird oder
- bei dem die Sprache eines Teilnehmers anhand seiner Rufnummer bestimmt und in Folge eine Konferenzschaltung zwischen dem Teilnehmer, einem geeigneten Bearbeiter in der Notrufstelle und einem Übersetzer aufgebaut wird.

Nicht alle Teilnehmer in einem Telekommunikationsnetz, welches die erfindungsgemäße Notrufstelle beinhaltet, sprechen zwangsläufig dieselbe Sprache. Deswegen wird hier die Sprache eines Teilnehmers aufgrund seiner Rufnummer ermittelt. Jeder Vorwahlnummer ist in der Regel nämlich ein geographisches Gebiet und damit eine Sprache zugeordnet, was die Bestimmung auf einfache Weise ermöglicht. Danach wird der Ruf an einen geeigneten Bearbeiter, welcher die ermittelte Sprache spricht, weitervermittelt oder ein Übersetzer mit Hilfe einer Konferenzschaltung hinzugezogen.

Günstig ist es, wenn bei Annahme des Notrufs
- das Gespräch durch Sprachaufzeichnung und/oder
- das Datum und die Uhrzeit des Anrufes und/oder
- die Rufnummer des Anrufenden und/oder
- der Name des Notrufbearbeiters protokolliert wird.
Wichtige Daten werden hier automatisch mitprotokolliert, damit die Information auch zu einem späteren Zeitpunkt unverfälscht zugänglich ist.

Eine vorteilhafte Variante der Erfindung ist auch mit einem Verfahren gegeben, bei dem von der Notrufstelle bei der Weitervermittlung des Notrufs an eine Notrufstation die Rufnummer des Teilnehmers als "Calling Party Number" an die Notrufstation signalisiert wird. Der Notrufstation liegt somit unmittelbar eine Kontaktmöglichkeit zum Teilnehmer vor.

Die Aufgabe der Erfindung wird auch mit einem Telekommunikationsnetz gelöst, welches Mittel zur Annahme und Behandlung eines Notrufes eines Netzteilnehmers sowie zur Weitervermittlung dieses Anrufes an eine zuständige Notrufstation umfasst, wobei für die Annahme des Notrufs eine einzige Notrufstelle im Telekommunikationsnetz vorgesehen ist.

Für das erfindungsgemäße Telekommunikationsnetz gelten die bereits beim erfindungsgemäßen Verfahren genannten Vorteile in gleicher Weise. Auch sind vorteilhafte Ausgestaltungen des Verfahrens in analoger Weise auch für das Telekommunikationsnetz anwendbar.

Besonders vorteilhaft ist es jedenfalls, wenn die Notrufstelle in einen Vermittlungsknoten eines öffentlichen Telekommunikationsnetzes integriert ist. Hierbei können beispielsweise alle Signalisierungsinformationen des Telekommunikationsnetzes ausgewertet werden, beziehungsweise können Signalisierungsinformationen leicht auch in das Telekommunikationsnetz übermittelt werden. So kann eine Rufnummer eines rufenden Teilnehmers selbst dann ausgewertet werden, wenn dieser den Dienst "Rufnummernunterdrückung" aktiviert hat. Auch kann eine Notrufstelle bei der Weitervermittlung des Notrufs an eine Notrufstation die Rufnummer des rufenden Teilnehmers als "Calling Party Number" an die Notrufstation signalisieren.

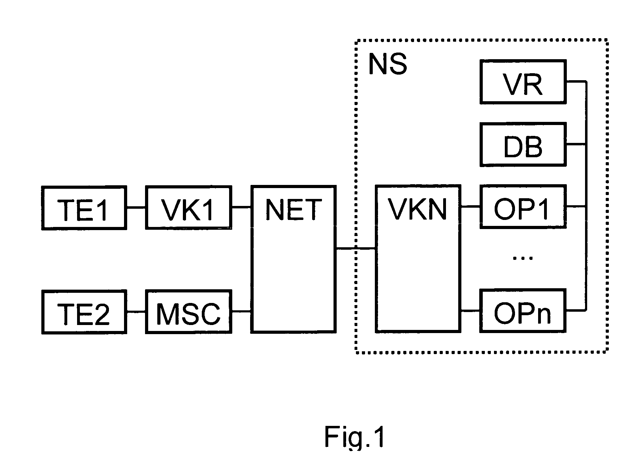

Die Erfindung wird anhand eines in der Figur 1 dargestellten Ausführungsbeispiels näher erläutert, welches die Behandlung zweier Notrufe betrifft.

Figur 1 zeigt einen ersten Teilnehmer TE1, der an einen Vermittlungsknoten VK1 eines Festnetzes angeschlossen ist, und einen zweiten Teilnehmer TE2, der an einen Vermittlungsknoten MSC eines Mobilfunknetzes angeschlossen ist. Des weiteren umfasst die Figur 1 eine Notrufstelle NS welche einen Vermittlungsknoten VKN, einen ersten bis n-ten Operatorplatz OP1..Opn, eine Datenbank DB sowie einen Sprachaufzeichnungsautomaten VR beinhaltet. Der Festnetzvermittlungsknoten VK1, der Mobilfunknetzvermittlungsknoten MSC und der Notrufstellenvermittlungsknoten VKN sind dabei über das Telekommunikationsnetz NET miteinander verbunden. Schließlich sind die Datenbank DB und der Sprachaufzeichnungsautomat VR an die Operatorplätze OP1..Opn angeschlossen.

Die Funktion der in der Figur dargestellten Anordnung ist nun wie folgt:

Bei einer ersten Beispielsvariante ist der erste Teilnehmer TE1 in Not geraten und wählt deshalb die Nummer der Notrufstelle NS. Dabei wird die Rufnummer des ersten Teilnehmers TE1 an die Notrufstelle NS signalisiert. In der Notrufstelle NS wird in Folge der Notruf beispielsweise am ersten Operatorplatz OP1 angenommen und die Rufnummer an die Datenbank DB weitergeleitet. Dort wird ein zur Rufnummer passender Eintrag gesucht und so die Standortinformation des ersten Teilnehmers TE1 ermittelt. Danach werden die relevanten Daten wie Datum und Uhrzeit, Rufnummer und Standort des ersten Teilnehmers TE1, der Name des Operators am ersten Operatorplatz OP1 automatisch protokolliert und die Sprachaufzeichnung mit Hilfe des Sprachaufzeichnungsautomaten VR gestartet. Weiterhin wird angenommen, dass anhand der Rufnummer in der Datenbank DB eine dem ersten Teilnehmer TE1 zugeordnete Sprache ermittelt wird. Da der Operator am ersten Operatorplatz OP1 diese Sprache nicht spricht, wird automatisch eine Konferenzschaltung zu einem in der Figur nicht dargestellten Übersetzer aufgebaut. Nachdem der Operator genügend Details über die Notsituation erfragt hat, wird der Ruf an eine ebenfalls nicht dargestellte Notstation weitergeleitet. Zusätzlich wird der Standort des ersten Teilnehmers TE1 in eine elektronische Landkarte eingetragen, eine aufgrund der aktuellen Verkehrssituation optimale Route vom Standort der Einsatzkräfte zum Einsatzort ermittelt und ebenfalls in die Landkarte eingetragen und diese zuletzt, beispielsweise per Fax, an die Notstation übermittelt.

Eine zweite Variante zeigt den Anruf eines in Not geratenen zweiten Teilnehmers TE2. Der Ablauf gestaltet sich dabei gleich wie beim ersten Beispiel, nur dass hier die Ortsinformation nicht über die Rufnummer ermittelt werden kann, da es sich beim zweiten Teilnehmer TE2 um einen Mobilfunknetzteilnehmer handelt. Deswegen wird hier vom Mobilfunknetzvermittlungsknoten MSC eine Information, in welcher Mobilfunkzelle sich der zweite Teilnehmer TE2 gerade aufhält, an die Notrufstelle NS übertragen.

## Patentansprüche

1. Verfahren zur Behandlung von Notrufen in einem Telekommunikationsnetz (NET), bei dem ein Notruf eines Netzteilnehmers (TE1, TE2) bei einer Notrufstelle (NS) eingeht, dort behandelt und gegebenenfalls an eine zuständige Notrufstation weitervermittelt wird,
**dadurch gekennzeichnet,**
**dass** alle Notrufe der Netzteilnehmer (TE1, TE2) von einer einzigen Notrufstelle (NS) im Telekommunikationsnetz (NET) angenommen werden.

2. Verfahren nach Anspruch 1, **dadurch gekennzeichnet, dass** eine Standortinformation eines anrufenden Netzteilnehmers (TE1, TE2) ausgewertet wird.

3. Verfahren nach Anspruch 2, **dadurch gekennzeichnet, dass** bei einem Teilnehmer (TE2) in einem Mobilfunknetz
- als Standortinformation die Mobilfunkzelle, in der sich der Teilnehmer (TE2) befindet, bestimmt wird oder
- die Bestimmung der Standortinformation durch Peilung des Teilnehmers (TE2) durchgeführt wird.

4. Verfahren nach Anspruch 2, **dadurch gekennzeichnet, dass** die Standortinformation bei einem Teilnehmer (TE1) in einem drahtgebundenen Netz
- anhand der Rufnummer des Teilnehmers (TE1) bestimmt wird oder
- durch Suche eines zur Rufnummer des Teilnehmers (TE1) passenden Eintrags in einer Adressdatenbank (DB) bestimmt wird.

5. Verfahren nach einem der Ansprüche 2 bis 4, **dadurch gekennzeichnet, dass** die Standortinformation in eine elektronische Landkarte eingetragen und diese Landkarte an die Notrufstation übermittelt wird.

6. Verfahren nach Anspruch 5, **dadurch gekennzeichnet, dass** in die elektronische Landkarte auch eine Weginformation von einem der Notrufstation zuordneten Ort zum Standort des Teilnehmers (TE1, TE2) eingetragen wird.

7. Verfahren nach einem der Ansprüche 1 bis 6, **dadurch gekennzeichnet,**
- **dass** die Sprache eines Teilnehmers (TE1, TE2) anhand seiner Rufnummer bestimmt und der Notruf in Folge einem geeigneten Bearbeiter in der Notrufstelle (NS) zugewiesen wird oder
- **dass** die Sprache eines Teilnehmers (TE1, TE2) anhand seiner Rufnummer bestimmt und in Folge eine Konferenzschaltung zwischen dem Teilnehmer (TE1, TE2), einem geeigneten Bearbeiter in der Notrufstelle (NS) und einem Übersetzer aufgebaut wird.

8. Verfahren nach einem der Ansprüche 1 bis 7, **dadurch gekennzeichnet, dass** von der Notrufstelle (NS) bei der Weitervermittlung des Notrufs an eine Notrufstation die Rufnummer des Teilnehmers (TE1, TE2) als "Calling Party Number" an die Notrufstation signalisiert wird.

9. Telekommunikationsnetz (NET) umfassend Mittel zur Annahme und Behandlung eines Notrufes eines Netzteilnehmers (TE1, TE2) sowie zur Weitervermittlung dieses Anrufes an eine zuständige Notrufstation,
**dadurch gekennzeichnet,**
**dass** für die Annahme des Notrufs eine einzige Notrufstelle (NS) im Telekommunikationsnetz (NET) vorgesehen ist.

10. Verfahren nach Anspruch 9, **dadurch gekennzeichnet, dass** die Notrufstelle (NS) in einen Vermittlungsknoten (VKN) eines öffentlichen Telekommunikationsnetzes (NET) integriert ist.
